(19) **Europäisches Patentamt**
**European Patent Office**
**Office européen des brevets**

(11) **EP 4 529 033 A1**

(12) **EUROPEAN PATENT APPLICATION**
published in accordance with Art. 153(4) EPC

(43) Date of publication:
**26.03.2025 Bulletin 2025/13**

(21) Application number: **23818968.2**

(22) Date of filing: **29.05.2023**

(51) International Patent Classification (IPC):
***H04B 7/0413*** (2017.01)

(52) Cooperative Patent Classification (CPC):
**H04B 7/0413; H04B 7/06**

(86) International application number:
**PCT/CN2023/096920**

(87) International publication number:
**WO 2023/236803 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.06.2022 CN 202210655463**

(71) Applicant: **Huawei Technologies Co., Ltd.
Shenzhen, Guangdong 518129 (CN)**

(72) Inventors:
• **HANG, Haicun
Shenzhen, Guangdong 518129 (CN)**
• **CHEN, Jiaxuan
Shenzhen, Guangdong 518129 (CN)**
• **LI, Yuan
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **CHANNEL INFORMATION TRANSMISSION METHOD, COMMUNICATION APPARATUS AND
COMMUNICATION DEVICE**

(57)    This application provides a channel information transmission method, a communication apparatus, and a communication device. The method includes: A first apparatus sends first information to a second apparatus, where the first information indicates a sparsity characteristic of a channel between the first apparatus and the second apparatus; the second apparatus determines a first processing parameter based on the first information; and the first apparatus receives second information from the second apparatus, where the second information indicates the first processing parameter, and the first processing parameter is for processing channel information. The technical solutions of this application can improve channel information feedback efficiency.

FIG. 3

**Description**

This application claims priority to Chinese Patent Application No. 202210655463.6, filed with the China National Intellectual Property Administration on June 10, 2022, and entitled "CHANNEL INFORMATION TRANSMISSION METHOD, COMMUNICATION APPARATUS, AND COMMUNICATION DEVICE", which is incorporated herein by reference in its entirety.

**TECHNICAL FIELD**

This application relates to the communication field, and more specifically, to a channel information transmission method, a communication apparatus, and a communication device.

**BACKGROUND**

A multiple-input multiple-output (multiple-input multiple-output, MIMO) communication technology utilizes a multi-path characteristic of a channel to realize spatial multiplexing for a plurality of data streams that are transmitted in parallel. For example, a network device may precode to-be-sent downlink data, so that data of different UE or data of different data streams of same UE is spatially isolated. This improves a downlink data transmission rate.

The network device learns of a downlink channel state based on channel state information fed back by a terminal device, and determines precoding of the downlink data based on the channel state information. Currently, how to feed back the channel state information in different environments with low overheads and high precision is an important research topic.

**SUMMARY**

Embodiments of this application provide a channel information transmission method, a communication apparatus, and a communication device, to improve channel information feedback efficiency.

According to a first aspect, a channel information transmission method is provided, and the method includes: A first apparatus sends first information to a second apparatus, where the first information indicates a sparsity characteristic of a channel between the first apparatus and the second apparatus; and the first apparatus receives second information from the second apparatus, where the second information indicates a first processing parameter, and the first processing parameter is for processing channel information.

According to the foregoing solution, the first apparatus provides the second apparatus with the sparsity characteristic of the channel between two apparatuses, so that the second apparatus may determine, based on the sparsity characteristic of the channel, the corresponding processing parameter for processing the channel information by the first apparatus and notify the first apparatus of the processing parameter, so that after processing the channel information based on the first processing parameter, the first apparatus can obtain CSI bit overheads that match the sparsity characteristic of the channel, to improve feedback efficiency of the channel information. This implements proper allocation of a radio resource and improves resource utilization.

With reference to the first aspect, in some implementations of the first aspect, the first processing parameter includes one or more of the following:

a quantization parameter, an encoding/decoding parameter for compression, or a time-frequency resource parameter.

According to the foregoing solution, the first processing parameter may be one or more of the quantization parameter, the encoding/decoding parameter for compression, or the time-frequency resource parameter, so that after processing the channel information based on the first processing parameter, the first apparatus can obtain the CSI bit overheads that match the sparsity characteristic of the channel.

With reference to the first aspect, in some implementations of the first aspect, the first information includes P energy proportions, and the P energy proportions are respective proportions of energy of P paths with strongest energy on the channel in total energy of the channel.

According to the foregoing solution, the first apparatus may notify the second apparatus of the sparsity characteristic of the channel by feeding back the energy proportions of the P paths with strongest energy. In this way, the second apparatus can learn of an energy distribution state of a path with strong energy on the channel, to properly determine bit overheads of CSI fed back by the first apparatus, and determine a corresponding processing parameter.

With reference to the first aspect, in some implementations of the first aspect, the first information includes a quantity N of paths, N is a positive integer, and a proportion of a sum of energy of at least N paths with strongest energy on the channel in total energy of the channel is greater than or equal to a target energy proportion.

According to the foregoing solution, the first apparatus may feed back a minimum quantity of paths that meet target energy, so that the second apparatus learns of, based on the minimum quantity of paths that meet the target energy, an energy distribution state of a path on the channel, and determines the sparsity characteristic of the channel. In this way, the second apparatus can properly determine bit overheads of CSI fed back by the first apparatus, and determine a corresponding processing parameter.

With reference to the first aspect, in some implementations of the first aspect, that a first apparatus sends first information to a second apparatus includes: The first apparatus periodically sends, to the second apparatus, information that indicates the sparsity characteristic of the channel.

According to the foregoing solution, the first apparatus may periodically notify the second apparatus of the sparsity characteristic of the channel, so that the second apparatus learns of a change of the sparsity characteristic of the channel within a period of time, to notify the first apparatus of an updated processing parameter in a timely manner.

With reference to the first aspect, in some implementations of the first aspect, that a first apparatus sends first information to a second apparatus includes: The first apparatus receives third information from the second apparatus, where the third information indicates the first apparatus to feed back the sparsity characteristic of the channel; and the first apparatus sends the first information to the second apparatus.

According to the foregoing solution, the second apparatus may indicate the first apparatus to feed back the sparsity characteristic of the channel when the second apparatus needs to obtain the sparsity characteristic or an updated sparsity characteristic of the channel. A case is reduced in which a transmission resource is occupied, by the sparsity characteristic that is of the channel and that is fed back by the first apparatus, when the second apparatus does not need to obtain the sparsity characteristic of the channel or the updated sparsity characteristic of the channel. This can reduce a resource waste, and improve resource utilization.

With reference to the first aspect, in some implementations of the first aspect, the method further includes: The first apparatus processes the channel information based on the first processing parameter to obtain channel state information. The first apparatus sends the channel state information to the second apparatus.

According to the foregoing solution, after processing the channel information based on the first processing parameter, the first apparatus can obtain the CSI bit overheads that match the sparsity characteristic of the channel. This can improve the feedback efficiency of the channel information. This implements the proper allocation of the radio resource and improves the resource utilization.

With reference to the first aspect, in some implementations of the first aspect, the processing the channel information based on the first processing parameter to obtain channel state information includes: determining a first encoding model based on the first processing parameter; inputting the channel information into the first encoding model, to obtain the channel state information output by the first encoding model; and sending the channel state information to the second apparatus.

According to the foregoing solution, the first apparatus may determine the first encoding model based on the first processing parameter, so that bit overheads of the channel state information obtained by processing the channel information based on the first encoding model match the sparsity characteristic of the channel, to improve the feedback efficiency of the channel information. This implements the proper allocation of the radio resource and improves the resource utilization.

With reference to the first aspect, in some implementations of the first aspect, the method further includes: obtaining, through training, a plurality of encoding models corresponding to a plurality of processing parameters, where the plurality of processing parameters include the first processing parameter; and determining a first encoding model based on the first processing parameter includes: determining, based on the first processing parameter, the first encoding model corresponding to the first processing parameter from the plurality of encoding models.

According to the foregoing solution, the first apparatus may obtain, through model training, the plurality of encoding models corresponding to the plurality of processing parameters. After obtaining the first processing parameter from the second apparatus, the first apparatus determines, from the plurality of encoding models, a model corresponding to the first processing parameter, to obtain bit overheads of channel state information that is output by the model and that matches the sparsity characteristic of the channel.

According to a second aspect, a channel information transmission method is provided, and the method includes: A second apparatus receives first information from a first apparatus, where the first information indicates a sparsity characteristic of a channel between the first apparatus and the second apparatus; the second apparatus determines a first processing parameter of channel information based on the first information; and the second apparatus sends second information to the first apparatus, where the second information indicates the first processing parameter.

With reference to the second aspect, in some implementations of the second aspect, the resource parameter includes one or more of the following:

a quantization parameter, a compression encoding parameter, or a time-frequency resource parameter.

With reference to the second aspect, in some implementations of the second aspect, the first information includes P energy proportions, and the P energy proportions are respective proportions of energy of P paths with strongest energy on the channel in total energy of the channel.

With reference to the second aspect, in some implementations of the second aspect, the first information includes a quantity N of paths, N is a positive integer, and a proportion of a sum of energy of at least N paths with strongest energy on the channel in total energy of the channel is greater than or equal to a target energy proportion.

With reference to the second aspect, in some implementations of the second aspect, that a second apparatus receives first information from a first apparatus includes: The second apparatus periodically receiving information that is from the first apparatus and that indicates the sparsity characteristic of the channel, where the first information is information received by the second apparatus in one period.

With reference to the second aspect, in some implementations of the second aspect, that a second apparatus receives first information from a first apparatus includes: The second apparatus sends third information to the first apparatus, where the third information indicates the first apparatus to feed back the sparsity characteristic of the channel; and the second apparatus receives the first information from the first apparatus.

With reference to the second aspect, in some implementations of the second aspect, the method further includes: The second apparatus receives channel state information from the first apparatus; and the second apparatus processes the channel state information based on the first processing parameter to obtain the channel information.

With reference to the second aspect, in some implementations of the second aspect, the processing the channel state information based on the first processing parameter to obtain the channel information includes: determining a first decoding model based on the first processing parameter; and inputting the channel state information into the first decoding model, to obtain the channel information output by the first decoding model.

With reference to the second aspect, in some implementations of the second aspect, the method further includes: The first apparatus obtains, through training, a plurality of decoding models corresponding to a plurality of processing parameters, where the plurality of processing parameters include the first processing parameter; and the determining a first decoding model based on the first processing parameter includes: determining, based on the first processing parameter, the first decoding model corresponding to the first processing parameter from the plurality of decoding models.

According to a third aspect, a communication apparatus is provided. In a design, the apparatus may include modules one-to-one corresponding to the method/operations/steps/actions described in the first aspect. The modules may be hardware circuits, may be software, or may be implemented by using a combination of a hardware circuit and software. In a design, the apparatus includes: a processing unit, configured to determine a sparsity characteristic of a channel between a first apparatus and a second apparatus; and a transceiver unit, configured to send first information to the second apparatus, where the first information indicates the sparsity characteristic of the channel.

The transceiver unit is further configured to receive second information from the second apparatus, where the second information indicates a first processing parameter, and the first processing parameter is for processing channel information.

With reference to the third aspect, in some implementations of the third aspect, the first processing parameter includes one or more of the following:

a quantization parameter, an encoding/decoding parameter for compression, or a time-frequency resource parameter.

With reference to the third aspect, in some implementations of the third aspect, the first information includes P energy proportions, and the P energy proportions are respective proportions of energy of P paths with strongest energy on the channel in total energy of the channel.

With reference to the third aspect, in some implementations of the third aspect, the first information includes a quantity N of paths, N is a positive integer, and a proportion of a sum of energy of at least N paths with strongest energy on the channel in total energy of the channel is greater than or equal to a target energy proportion.

With reference to the third aspect, in some implementations of the third aspect, the transceiver unit is specifically configured to periodically send, to the second apparatus, information that indicates the sparsity characteristic of the channel, where the first information is information sent by the first apparatus in one period.

With reference to the third aspect, in some implementations of the third aspect, the transceiver unit is specifically configured to: receive third information from the second apparatus, where the third information indicates the first apparatus to feed back the sparsity characteristic of the channel; and send the first information to the second apparatus.

With reference to the third aspect, in some implementations of the third aspect, the processing unit is further configured to process the channel information based on the first processing parameter, to obtain channel state information; and the transceiver unit is further configured to send the channel state information to the second apparatus.

With reference to the third aspect, in some implementations of the third aspect, the processing unit is further configured to: determine a first encoding model based on the first processing parameter; and input the channel information into the first encoding model, to obtain the channel state information output by the first encoding model. The transceiver unit is further configured to send the channel state information to the second apparatus.

With reference to the third aspect, in some implementations of the third aspect, the processing unit is further configured to obtain, through training, a plurality of encoding models corresponding to a plurality of processing parameters, where the plurality of processing parameters include the first processing parameter; and the processing unit is specifically configured to determine, based on the first processing parameter, the first encoding model corresponding to the first processing parameter from the plurality of encoding models.

According to a fourth aspect, a communication apparatus is provided. In a design, the apparatus may include modules one-to-one corresponding to the method/operations/steps/actions described in the second aspect. The modules may be hardware circuits, may be software, or may be implemented by using a combination of a hardware circuit and software. In a design, the apparatus includes a transceiver unit, configured to receive first information from a first apparatus, where the first information indicates a sparsity characteristic of a channel between the first apparatus and a second apparatus; and a processing unit, configured to determine a first processing parameter of channel information based on the first information. The transceiver unit is further configured to send second information to the first apparatus, where the second information indicates the first processing parameter.

With reference to the fourth aspect, in some implementations of the fourth aspect, the processing parameter includes one or more of the following:

a quantization parameter, a compression encoding parameter, or a time-frequency resource parameter.

With reference to the fourth aspect, in some implementations of the fourth aspect, the first information includes P energy proportions, and the P energy proportions are respective proportions of energy of P paths with strongest energy on the channel in total energy of the channel.

With reference to the fourth aspect, in some implementations of the fourth aspect, the first information includes a quantity N of paths, N is a positive integer, and a proportion of a sum of energy of at least N paths with strongest energy on the channel in total energy of the channel is greater than or equal to a target energy proportion.

With reference to the fourth aspect, in some implementations of the fourth aspect, the transceiver unit is specifically configured to periodically receive information that is from the first apparatus and that indicates the sparsity characteristic of the channel, where the first information is information received by the second apparatus in one period.

With reference to the fourth aspect, in some implementations of the fourth aspect, the transceiver unit is specifically configured to: send third information to the first apparatus, where the third information indicates the first apparatus to feed back the sparsity characteristic of the channel; and receive the first information from the first apparatus.

With reference to the fourth aspect, in some implementations of the fourth aspect, the transceiver unit is further configured to receive channel state information from the first apparatus. The processing unit is further configured to process the channel state information based on the first processing parameter, to obtain the channel information.

With reference to the fourth aspect, in some implementations of the fourth aspect, the processing unit is specifically configured to: determine a first decoding model based on the first processing parameter; and input the channel state information into the first decoding model, to obtain the channel information output by the first decoding model.

With reference to the fourth aspect, in some implementations of the fourth aspect, the processing unit is further configured to obtain, through training, a plurality of decoding models corresponding to a plurality of processing parameters, where the plurality of processing parameters include the first processing parameter; and the processing unit is specifically configured to determine, based on the first processing parameter, the first decoding model corresponding to the first processing parameter from the plurality of decoding models.

According to a fifth aspect, a communication apparatus is provided, and includes a processor. The processor may implement the method according to any one of the first aspect and the possible implementations of the first aspect. Optionally, the communication apparatus further includes a memory. The processor is coupled to the memory, and may be configured to execute instructions in the memory, to implement the method according to any one of the first aspect or the possible implementations of the first aspect. Optionally, the communication apparatus further includes a communication interface, and the processor is coupled to the communication interface. In embodiments of this application, the communication interface may be a transceiver, a pin, a circuit, a bus, a module, or a communication interface of another type. This is not limited.

In an implementation, the communication apparatus is a terminal device. When the communication apparatus is the terminal device, the communication interface may be a transceiver or an input/output interface.

In another implementation, the communication apparatus is a chip configured in a terminal device. When the communication apparatus is the chip configured in the terminal device, the communication interface may be an input/output interface.

Optionally, the transceiver may be a transceiver circuit. Optionally, the input/output interface may be an input/output circuit.

According to a sixth aspect, a communication apparatus is provided, and includes a processor. The processor may implement the method according to any one of the second aspect and the possible implementations of the second aspect. Optionally, the communication apparatus further includes a memory. The processor is coupled to the memory, and may be configured to execute instructions in the memory, to implement the method according to any one of the second aspect or the possible implementations of the second aspect. Optionally, the communication apparatus further includes a communication interface, and the processor is coupled to the communication interface.

In an implementation, the communication apparatus is a network device. When the communication apparatus is the network device, the communication interface may be a transceiver or an input/output interface.

In another implementation, the communication apparatus is a chip configured in a network device. When the communication apparatus is the chip configured in the first network device, the communication interface may be an input/output interface.

Optionally, the transceiver may be a transceiver circuit. Optionally, the input/output interface may be an input/output circuit.

According to a seventh aspect, a processor is provided, and includes an input circuit, an output circuit, and a processing circuit. The processing circuit is configured to: receive a signal through the input circuit, and transmit a signal through the output circuit, to enable the processor to perform the method in any one of the first aspect or the second aspect and the possible implementations of the first aspect or the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a computer program product is provided. The computer program product includes a computer program (which may also be referred to as code or instructions). When the computer program is run, a computer is enabled to perform the method according to any one of the first aspect or the second aspect and the possible implementations of the first aspect or the second aspect.

According to a ninth aspect, a computer-readable storage medium is provided. The computer-readable storage medium stores a computer program (which may also be referred to as code or instructions). When the computer program is run on a computer, the computer is enabled to perform the method according to any one of the first aspect or the second aspect and the possible implementations of the first aspect or the second aspect.

According to a tenth aspect, a communication system is provided, and includes the foregoing at least one first apparatus and at least one second apparatus.

**BRIEF DESCRIPTION OF DRAWINGS**

FIG. 1 is a diagram of a communication system according to an embodiment of this application;
FIG. 2 is a schematic flowchart of transmitting channel information according to an embodiment of this application;
FIG. 3 is a schematic flowchart of a channel information transmission method according to an embodiment of this application;
FIG. 4 is another schematic flowchart of a channel information transmission method according to an embodiment of this application;
FIG. 5 is a schematic block diagram of an example of a communication apparatus according to an embodiment of this application;
FIG. 6 is a diagram of a structure of an example of a terminal device according to an embodiment of this application; and
FIG. 7 is a diagram of a structure of an example of a network device according to an embodiment of this application.

**DESCRIPTION OF EMBODIMENTS**

In this application, "at least one (item)" may be also described as "one (item) or more (items)", and "a plurality of (items)" may be two (items), three (items), four (items), or more (items). This is not limited. "/" may represent an "or" relationship between associated objects. For example, A/B may represent A or B. "And/or" may indicate that there are three relationships between associated objects. For example, A and/or B may represent the following three cases: Only A exists, both A and B exist, and only B exists, where A and B may be singular or plural. For ease of describing the technical solutions of this application, a word such as "first", "second", "A", or "B" may be used to distinguish between technical features with a same or similar function. The word such as "first", "second", "A", or "B" does not limit a quantity and an execution sequence. In addition, the word such as "first", "second", "A", or "B" does not limit a definite difference. A word such as "example" or "for example" is used to represent an example, an evidence, or a description. Any design solution described as "example" or "for example" should not be explained as being more preferred or having more advantages than another design solution. A word, for example, "example" or "for example", is used to present a related concept in a specific manner for ease of understanding.

The following describes technical solutions of this application with reference to accompanying drawings.

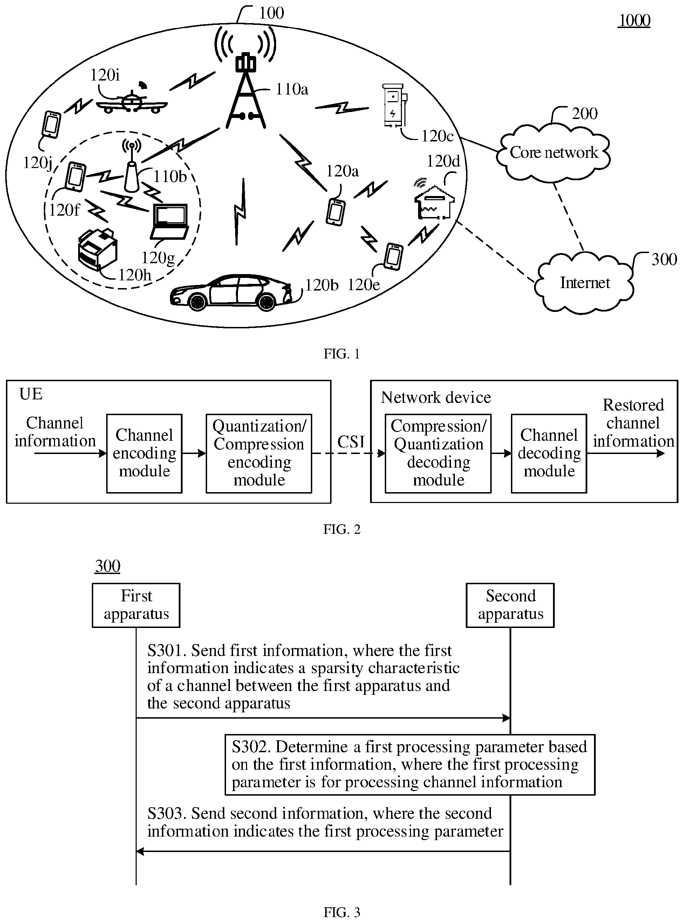

FIG. 1 is a diagram of an architecture of a communication system 1000 applicable to this application. As shown in FIG. 1, the communication system includes a radio access network (radio access network, RAN) 100 and a core network (core network, CN) 200. Optionally, the communication system 1000 may further include an internet 300. The radio access network 100 may include at least one access network device (for example, 110a and 110b in FIG. 1), and may further include at least one terminal (for example, 120a to 120j in FIG. 1). The terminal is connected to an access network device in a wireless manner, and the terminal and the access network device may perform wireless communication by using an unlicensed spectrum resource. Terminals may also be connected in the wireless manner, and the terminals may perform wireless communication by using an unlicensed spectrum resource. The access network device is connected to the core network in a wireless or wired manner. A core network device and the access network device may be different physical devices that are independent, or may be a same physical device that integrates functions of the core network device and functions of the access network device. Alternatively, there may be another possible case: For example, functions of the access network device and a part of functions of the core network device may be integrated into one physical device, and another physical device implements a remaining part of the functions of the core network device. Physical existence forms of the core network device and the access network device are not limited in this application. Access network devices may be connected to each other in the wired or wireless manner. FIG. 1 is merely a diagram. The communication system may further include another network device, for example, may further include a wireless relay device and a wireless backhaul device. The communication device shown in FIG. 1 may perform wireless communication by using an unlicensed spectrum resource. When performing communication by using the unlicensed spectrum resource, the communication device may obtain an idle channel detection policy by using the communication method provided in this application, and perform idle channel detection on the unlicensed spectrum according to the obtained idle channel detection policy.

The network device may be a base station (base station), a NodeB (NodeB), an evolved NodeB (evolved NodeB, eNodeB or eNB), a transmission reception point (transmission reception point, TRP), a next generation NodeB (next generation NodeB, gNB) in a 5th generation (5th generation, 5G) mobile communication system, an access network device in an open radio access network (open radio access network, O-RAN or open RAN), a next-generation base station in a 6th generation (6th generation, 6G) mobile communication system, a base station in a future mobile communication system, an access node in a wireless fidelity (wireless fidelity, Wi-Fi) system, or the like. Alternatively, the access network device may be a module or unit that implements a part of functions of a base station, for example, may be a central unit (central unit, CU), a distributed unit (distributed unit, DU), a central unit-control plane (CU control plane, CU-CP) module, or a central unit-user plane (CU user plane, CU-UP) module. The access network device may be a macro base station (for example, 110a in FIG. 1), may be a micro base station or an indoor base station (for example, 110b in FIG. 1), or may be a relay node, a donor node, or the like. A specific technology and a specific device form that are used by the access network device are not limited in this application. A 5G system may also be referred to as a new radio (new radio, NR) system. An access network node in this application may be the access network device, or may be a module or unit configured in the access network device.

In this application, an apparatus configured to implement a function of the network device may be an access network device, or may be an apparatus that can support the network device in implementing the function, for example, a chip system, a hardware circuit, a software module, or a combination of a hardware circuit and a software module. The apparatus may be installed in the access network device or may match the access network device for use. In this application, the chip system may include a chip, or may include a chip and another discrete component. For ease of description, the following describes the technical solutions provided in this application by using an example in which the apparatus configured to implement the function of the access network device is an access network device and the access network device is a base station.

Optionally, a protocol layer structure between the access network device and the terminal may further include an artificial intelligence (artificial intelligence, AI) layer, for transmitting data related to an AI function.

The protocol layer structure between the access network device and the terminal may be considered as an access stratum (access stratum, AS) structure. Optionally, there may further be a non-access stratum (non-access stratum, NAS) above an AS, and the NAS is used by the access network device to forward, to the terminal, information that is from the core network device, or is used by the access network device to forward, to the core network device, information that is from the terminal. In this case, this may be considered as that there is a logical interface between the terminal and the core network device. The access network device may forward the information between the terminal and the core network device in a transparent transmission manner. For example, NAS signaling may be mapped to or included in radio resource control (radio resource control, RRC) signaling, and is used as an element of the RRC signaling.

The terminal device may also be referred to as a terminal, user equipment (user equipment, UE), a mobile station, a mobile terminal, or the like. The terminal may be widely used in various scenarios for communication. For example, the scenario includes but is not limited to at least one of the following scenarios: enhanced mobile broadband (enhanced mobile broadband, eMBB), ultra-reliable low-latency communication (ultra-reliable low-latency communication, URLLC), massive machine-type communications (massive machine-type communications, mMTC), device-to-device (device-to-device, D2D), vehicle to everything (vehicle to everything, V2X), machine-type communication (machine-type communication, MTC), an internet of things (internet of things, IoT), virtual reality, augmented reality, industrial control, self-driving, telemedicine, a smart grid, smart furniture, smart office, a smart wearable, smart transportation, a smart city, or the like. The device may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the device are not limited in this application.

In this application, an apparatus configured to implement a function of the terminal device may be a terminal device, or may be an apparatus that can support the terminal device in implementing the function, for example, a chip system, a hardware circuit, a software module, or a combination of a hardware circuit and a software module. The apparatus may be installed in the terminal device or may match the terminal device for use. For ease of description, the following describes the technical solutions provided in this application by using an example in which the apparatus configured to implement the function of the terminal device is a terminal device, and optionally, the terminal device is UE.

The base station and/or the terminal device may be fastened or movable. The base station and/or the terminal device may be deployed on the land, including an indoor or outdoor scenario, and a handheld or vehicle-mounted scenario; or may be deployed on the water; or may be deployed on an airplane, a balloon, and an artificial satellite in the air. An environment/a scenario in which the base station and the terminal device are located is not limited in this application. The base station and the terminal device may be deployed in a same environment/scenario or different environments/scenarios. For example, the base station and the terminal device are both deployed on the land. Alternatively, the base station is deployed on the land, and the terminal device is deployed on the water. Examples are not described one by one.

Roles of the base station and the terminal device may be relative. For example, the helicopter or the unmanned aerial vehicle 120i in FIG. 1 may be configured as a mobile base station. For the terminal device 120j that accesses the radio access network 100 through the 120i, the terminal device 120i is a base station. However, for the base station 110a, 120i may be a terminal device. In other words, 110a may communicate with 120i through a wireless air interface protocol. Alternatively, 110a and 120i communicate with each other according to an interface protocol between base stations. In this case, for 110a, 120i is also a base station. Therefore, both the base station and the terminal device may be collectively referred to as a communication apparatus (or communication device). 110a and 110b in FIG. 1 each may be referred to as a communication apparatus that has a base station function, and 120a to 120j in FIG. 1 each may be referred to as a communication apparatus that has a terminal device function.

In an actual communication environment, a channel includes a plurality of paths because of a scatterer on the channel. In a MIMO communication technology, a multi-path characteristic of the channel is used, to implement spatial multiplexing for a plurality of data streams that are transmitted in parallel. For example, the network device may precode to-be-sent downlink data, so that data of different UE or data of different data streams of same UE is spatially isolated. This improves a downlink data transmission rate.

The network device may determine precoding of the downlink data based on downlink channel information. When an uplink channel and a downlink channel do not have reciprocity, the network device may send a downlink reference signal (for example, a channel state information-reference signal (channel state information-reference signal, CSI-RS)) to the UE, and the UE receives the downlink reference signal, obtains the downlink channel information based on the downlink reference signal, and feeds back channel state information (channel state information, CSI) to the network device, so that the network device can learn of the downlink channel information from a UE side, to determine the precoding of the downlink data. Accuracy of the CSI fed back by the UE is related to integrity of channel information that can be restored by the network device.

FIG. 2 is a schematic flowchart of feeding back channel state information by UE to a network device. As shown in FIG. 2, after measuring a downlink reference signal to obtain channel information, the UE performs channel encoding on the channel information to obtain channel information with channel encoding. Then, the UE performs quantization compression on the channel information with channel encoding via a quantization/compression encoding module, and converts the channel information with channel encoding into a bit stream of a digital signal, where the bit stream is CSI obtained through channel information encoding. The UE maps the CSI to an uplink transmission resource allocated by the network device, and sends the CSI to the network device. Correspondingly, the network device receives the CSI from the UE on the uplink transmission resource, inputs the received CSI to a quantization/compression decoding module, performs dequantization/decompression on the CSI, and inputs dequantized/decompressed CSI to a channel decoding module, to obtain the restored channel information.

Bit overheads of the CSI fed back by the UE to the network device are determined by the network device. The network device may configure, for the UE based on CSI reporting configuration information, a parameter related to CSI reporting, and the network device further allocates, to the UE, an uplink transmission resource used to carry the CSI. The UE may determine, based on the related parameter configured based on the CSI reporting configuration information and the uplink transmission resource, a bit quantity of CSI obtained through channel encoding and quantization/compression, namely, the bit overheads of the CSI to be fed back to the network device.

A multi-path channel has a sparsity characteristic in terms of both angle and delay. Performance, of channel information restoration of the network device, under different sparsity characteristics of a channel and different CSI bit overheads is different. For CSI whose feedback overheads are 240 bits, when the channel is a line of sight (line of sight, LOS) path, the CSI bit overheads are reduced to 48 bits, and a performance loss of channel information restoration of the network device is only 2%; when the channel is a non-line of sight (non-line of sight, NLOS) path, the CSI bit overheads are reduced by half, in other words, the CSI bit overheads are 120 bits, and performance of channel information restoration of the network device is reduced by about 6%. It can be learned from this example that the bit overheads of the CSI fed back by the UE are not in direct proportion to the performance of channel information restoration of the network device. Because sparsity characteristics of channels are different, for some channels, increasing the CSI bit overheads by a large quantity cannot improve feedback precision of the channel information, and cannot significantly improve the performance of channel information restoration of the network device; while for some channels, the feedback precision may be quickly improved by increasing the CSI bit overheads, and the performance of channel information restoration of the network device is improved.

In this way, this application proposes that a data receiving apparatus (for example, the terminal device) may feed back the sparsity characteristic of the channel to a data sending apparatus (for example, the network device), so that the data sending apparatus determines, based on the sparsity characteristic of the channel, a processing parameter for processing the channel information, to properly allocate resources and improve CSI feedback efficiency.

FIG. 3 is a schematic flowchart of a communication method 300 according to an embodiment of this application. The communication method 300 includes but is not limited to the following steps.

S301. A first apparatus sends first information to a second apparatus, where the first information indicates a sparsity characteristic of a channel between the first apparatus and the second apparatus.

Correspondingly, the second apparatus receives the first information from the first apparatus.

The first apparatus may determine the sparsity characteristic of the channel based on channel information. The channel information represents the channel between the first apparatus and the second apparatus.

For example, the channel information may be a channel matrix, and the first apparatus determines the sparsity characteristic of the channel based on a co-correlation matrix of the channel matrix.

Optionally, the channel information may include channel information obtained by the first apparatus through statistics collection within a period of time. For example, the first apparatus obtains a statistical co-correlation matrix $R_t$ based on channel matrixes obtained through measurement at historical $t$ moments.

In an example, the co-correlation matrix $R_t$ may be represented as:

$$R_t = \sum_{i=1}^{t} H_i H_i^H$$

$H_i$ is a channel matrix obtained through measurement at an $i^{th}$ moment of the $t$ moments.

In another example, the co-correlation matrix Rt may be represented as:

$$R_t = \begin{cases} (1-\alpha)H_t H_t^H + \alpha R_{t-1} & ,t \geq 1 \\ H_1 H_1^H & ,t = 1 \end{cases}$$

$\alpha$ is a filtering coefficient, and $0 < \alpha < 1$.

The first apparatus performs singular value decomposition (singular value decomposition, SVD) on the co-correlation matrix Rt. For example, the co-correlation matrix may be represented as follows:

$$SVD(R_t) = U\Lambda V^H$$

Each column of $U$ is an eigenvector basis, and one eigenvector basis may represent one path of the channel. A is a diagonal matrix. For example, A may be represented as:

$$\Lambda = \begin{bmatrix} a_1 & 0 & 0 \\ 0 & a_2 & 0 \\ 0 & 0 & ... \end{bmatrix}$$

A value on a diagonal line of the diagonal matrix A is an eigenvalue. One eigenvalue corresponds to one eigenvector basis, and represents energy on the corresponding eigenvector basis, namely, energy of one path of the channel. For example, energy $a_i$ of an $i^{th}$ eigenvector basis represents that energy on an $i^{th}$ path of the channel is $a_i$, an $i^{th}$ column of the eigenvector basis of U specifically represents a beam direction of the $i^{th}$ path, and a sum $\Sigma_i a_i$ of energy on all eigenvector bases may represent that total energy of the channel is $\Sigma_i a_i$. A larger value of $a_i$ indicates greater energy on a

path corresponding to $a_i$.

The first apparatus may determine the sparsity characteristic of the channel based on energy distribution of a plurality of paths on the channel, and notify the second apparatus via the first information, so that the second apparatus may determine bit overheads of CSI fed back by the first apparatus to the second apparatus, and determine a to-be-used processing parameter, so that the first apparatus processes the channel information based on the processing parameter, to obtain the CSI with the corresponding bit overheads.

In an implementation, the first information includes P energy proportions, and the P energy proportions are respective proportions of energy of P paths with strongest energy on the channel in total energy of the channel.

For example, it may be specified that the quantity P of energy proportions fed back by the first apparatus is 3, and the first information sent by the first apparatus to the second apparatus includes three energy proportions, where the three energy proportions are respective proportions of energy of three paths with strongest energy on the channel between the first apparatus and the second apparatus in the total energy of the channel. For example, the three energy proportions indicated in the first information are 0.85, 0.1, and 0.04. After receiving the first information, the second apparatus may determine that a proportion of energy of a path with strongest energy on the channel in the total energy of the channel is 85%, a proportion of energy of a path with second strongest energy in the total energy of the channel is 10%, a proportion of energy of a path with third strongest energy in the total energy of the channel is 4%, and a proportion of a sum of energy of remaining paths in the total energy of the channel is 1%.

For another example, it may be specified that the quantity P of energy proportions fed back by the first apparatus is 2, and the first information sent by the first apparatus to the second apparatus includes two energy proportions, where the two energy proportions are respective proportions of energy of two paths with strongest energy on the channel between the first apparatus and the second apparatus in the total energy of the channel. For example, the two energy proportions indicated in the first information are 0.95 and 0.01. After receiving the first information, the second apparatus may determine that a proportion of energy of a path with strongest energy on the channel in the total energy of the channel is 95%, a proportion of energy of a path with second strongest energy in the total energy of the channel is 1%, and a proportion of a sum of energy of remaining paths in the total energy of the channel is 4%.

Optionally, the quantity P of energy proportions included in the first information may be predefined, indicated by the second apparatus, or determined by the first apparatus.

In another implementation, the first information includes a quantity N of paths, and N is a positive integer, where a proportion of a sum of energy of at least N paths with strongest energy on the channel in the total energy of the channel is greater than or equal to a target energy proportion.

It may be specified that the first information sent by the first apparatus to the second apparatus indicates a quantity of paths with strongest energy whose energy proportion sum meets the target energy proportion.

For example, the target energy proportion is 85%, and the first apparatus may determine, based on energy of paths, that a sum of energy proportions of at least three paths with strongest energy on the channel is greater than or equal to 85%. In this case, the first information sent by the first apparatus to the second apparatus indicates that the quantity of paths is 3. After receiving the first information, the second apparatus may determine that the sum of the energy proportions of at least three strongest paths on the channel is greater than or equal to 85%.

For another example, the target energy proportion is 95%, and the first apparatus may determine, based on energy of paths, that a sum of energy proportions of at least five strongest paths on the channel is greater than or equal to 95%. In this case, the first information sent by the first apparatus to the second apparatus indicates that the quantity of paths is 5. After receiving the first information, the second apparatus may determine that the sum of the energy proportions of at least five strongest paths on the channel is greater than or equal to 95%.

The target energy proportion may be specified in a protocol, or may be notified to the first apparatus after the second apparatus determines the target energy proportion.

For example, the first apparatus may be a terminal device, and the second apparatus may be a network device. When the network device may determine the target energy proportion and notify the terminal device of the target energy proportion, the terminal device notifies, based on energy proportions of paths, the network device of a minimum path quantity that meets the target energy proportion. When the network device determines that a CSI overheads requirement corresponding to the sparsity characteristic that is of the channel and that is reported by the terminal device does not match resources that can be allocated, the network device may update the target energy proportion, and notify the terminal device of an updated target energy proportion.

Optionally, that a first apparatus sends first information to a second apparatus includes: The first apparatus periodically sends, to the second apparatus, information that indicates the sparsity characteristic of the channel.

For example, the first apparatus may update statistical channel information in one period, determine an updated sparsity characteristic of the channel based on updated statistical channel information, and notify the second apparatus, so that the second apparatus may determine overheads of the CSI fed back by the first apparatus. Optionally, a period in which the first apparatus notifies the second apparatus of the sparsity characteristic of the channel is greater than a period in which the first apparatus feeds back the CSI to the second apparatus.

Optionally, the first apparatus may aperiodically send, to the second apparatus, information that indicates the sparsity characteristic of the channel.

In an implementation, the first apparatus receives third information from the second apparatus, where the third information indicates the first apparatus to feed back the sparsity characteristic of the channel. The first apparatus sends the first information to the second apparatus in response to the third information.

For example, the first information includes the quantity N of paths, and the target energy proportion may be notified by the second apparatus to the first apparatus. After the second apparatus indicates the updated target energy proportion to the first apparatus, for example, the second apparatus sends third information to the first apparatus, where the third information includes the updated target energy proportion. After receiving the third information, the first apparatus sends the first information to the second apparatus, where the quantity N, of paths, indicated by the first information indicates that a sum of energy proportions of at least N paths of the strongest path on the channel is greater than or equal to the updated target energy proportion.

In another implementation, when determining that a feedback condition is met, the first apparatus sends the first information to the second apparatus.

After the first apparatus feeds back the sparsity characteristic of the channel to the second apparatus, the first apparatus may determine, based on accumulative statistical channel information, whether the sparsity characteristic of the channel changes, and if a degree of a change in the sparsity characteristic of the channel meets a feedback condition of feeding back an updated sparsity characteristic of the channel to the second apparatus, the first apparatus may send the first information to the second apparatus.

S302. The second apparatus determines a first processing parameter based on the first information, where the first processing parameter is for processing the channel information.

After receiving the first information from the first apparatus, the second apparatus may determine, based on the sparsity characteristic that is of the channel and that is indicated by the first information, the overheads of the CSI fed back by the first apparatus to the second apparatus, to determine the first processing parameter, so that the first apparatus obtains the CSI with the corresponding overheads after processing the channel information based on the first processing parameter.

Optionally, the first processing parameter includes one or more of the following:

a quantization encoding parameter, an encoding/decoding parameter for compression, or a time-frequency resource parameter.

In an implementation, the first information includes the P energy proportions, and the P energy proportions are the respective proportions of the energy of the P paths with the strongest energy on the channel in the total energy of the channel.

For example, the second apparatus may determine, based on a correspondence among path energy, CSI bit overheads, and performance of channel information restoration shown in Table 1, bit overheads for feeding back the CSI by the first apparatus. As shown in Table 1, when an energy proportion of a strongest path is 0.95 and the CSI bit overheads are 48 bits, the performance of channel information restoration of the network device may reach 0.96. The performance of the restored channel information may be evaluated in a plurality of criteria, for example, evaluated as correlation performance. To be specific, correlation between original channel information and the restored channel information is 0.96. However, this application is not limited thereto. When an energy proportion of a strongest path is 0.95 and the CSI bit overheads are 60 bits, the performance of channel information restoration of the network device may reach 0.97. When a sum of energy proportions of two strongest paths on the channel is 0.95 and the CSI bit overheads are 48 bits, the performance of channel information restoration of the network device may reach 0.88. When a sum of energy proportions of two strongest paths on the channel is 0.95 and the CSI bit overheads are 60 bits, the performance of channel information restoration of the network device may reach 0.89. For example, the first information from the first apparatus indicates three energy proportions, the energy proportions are 0.85, 0.1, and 0.04 in descending order, and a sum of energy proportions of two paths, with strongest energy, of the first apparatus is 0.95. To obtain high restoration performance, the CSI bit overheads of the first apparatus may be 60 bits, to determine a corresponding first processing parameter and notify the first apparatus, so that the first apparatus can feed back 60-bit CSI to the second apparatus after processing the channel information based on the first processing parameter. However, this application is not limited thereto. The second apparatus may obtain the CSI bit overheads and/or the processing parameter through inference by using an algorithm or an artificial intelligence model and based on the sparsity characteristic that is of the channel and that is indicated by the first information.

**Table 1**

| Energy proportion (Quantity of strongest paths) | CSI bit overheads | Performance of channel information restoration |
| --- | --- | --- |
| 0.95 (1) | 48 | 0.96 |

(continued)

| Energy proportion (Quantity of strongest paths) | CSI bit overheads | Performance of channel information restoration |
|---|---|---|
| 0.95 (1) | 60 | 0.97 |
| 0.9 (1) | 48 | 0.89 |
| 0.9 (1) | 60 | 0.92 |
| ... | | |
| 0.95 (2) | 48 | 0.88 |
| 0.95 (2) | 60 | 0.89 |
| 0.9 (2) | 48 | 0.75 |
| 0.9 (2) | 60 | 0.78 |

For another example, the second apparatus may be a network device, and the first apparatus is a terminal device. The network device may further determine the CSI bit overheads of the terminal device by comprehensively considering a utilization status of a wireless network resource and a sparsity characteristic of a channel between the network device and the terminal device, to determine a first processing parameter. This comprehensively improves resource management performance of a wireless network. For example, two energy proportions fed back by the first terminal device are 0.85 and 0.1, two energy proportions fed back by the second terminal device are 0.95 and 0.01, and an energy proportion of a path with strongest energy of the second terminal device is 0.95. The network device may determine that a channel of the second terminal device is more sparse than a channel of the first terminal device. In a scenario in which resources are limited, the network device may allocate less CSI bit overheads, for example, 48 bits, to the second terminal device. In addition, the network device may allocate 60-bit CSI bit overheads to the first terminal device, to improve channel information feedback precision of the first terminal device, so that restoration performance of the channel information is improved. However, this application is not limited thereto. The network device may determine the CSI bit overheads of the terminal device based on the spare characteristic, of the channel, fed back by the terminal device and a resource scheduling state of the wireless network, to determine the first processing parameter.

In another implementation, the first information includes the quantity N of paths, and N is a positive integer, where the proportion of the sum of the energy of the at least N paths with strongest energy on the channel in the total energy of the channel is greater than or equal to the target energy proportion.

For example, the second apparatus may determine, based on a correspondence between a path quantity N and CSI bit overheads shown in Table 2, the bit overheads of the CSI fed back by the first apparatus, to determine a processing parameter of the channel information, so that the first apparatus obtains the CSI of the corresponding bit overheads after processing the channel information based on the processing parameter. As shown in Table 2, if the target energy proportion is 95%, and an energy proportion of a strongest path is greater than or equal to 95%, the CSI bit overheads may be 48 bits. If a sum of energy proportions of two strongest paths is greater than or equal to 95%, the CSI bit overheads may be 60 bits. For example, if the quantity N that is of paths and that is indicated by the first information of the first apparatus is 3, the second apparatus may determine that the CSI bit overheads of the first apparatus are 90 bits, to determine a processing parameter corresponding to the 90 bits, and notify the first apparatus. For another example, if the quantity N that is of paths and that is indicated by the first information of the first apparatus is 5, the second apparatus may determine that the CSI bit overheads of the first apparatus are 180 bits, to determine a processing parameter corresponding to the 180 bits, and notify the first apparatus. However, this application is not limited thereto. The second apparatus may obtain the CSI bit overheads and/or the processing parameter through inference by using an algorithm or an artificial intelligence model and based on the sparsity characteristic that is of the channel and that is indicated by the first information.

**Table 2**

| Quantity N of paths | CSI bit overheads |
|---|---|
| 1 | 48 |
| 2 | 60 |
| 3 | 90 |
| 4 | 120 |
| 5 | 180 |

(continued)

| Quantity N of paths | CSI bit overheads |
| --- | --- |
| ... | ... |

For another example, the second apparatus may be a network device, and the first apparatus is a terminal device. The network device may further determine the CSI bit overheads of the terminal device by comprehensively considering a utilization status of a wireless network resource and a sparsity characteristic of a channel between the network device and the terminal device, to determine a first processing parameter. This comprehensively improves resource management performance of a wireless network.

S203. The second apparatus sends second information to the first apparatus, where the second information indicates the first processing parameter.

Correspondingly, the first apparatus receives the second information from the second apparatus, and determines the first processing parameter based on the second information. When the first apparatus needs to feed back the CSI to the second apparatus, the first apparatus processes the channel information based on the first processing parameter to obtain the channel state information, and feeds back the channel state information to the second apparatus.

For example, the first processing parameter includes the quantization encoding parameter, and the first apparatus performs quantization encoding on the channel information with channel encoding based on the quantization encoding parameter to obtain CSI that meets a bit overheads requirement of the second apparatus, and feeds back the CSI to the second apparatus.

For another example, the first processing parameter includes the quantization encoding parameter and the time-frequency resource parameter. The first apparatus may determine, based on the time-frequency resource parameter, a time-frequency resource that carries the CSI. Then, the first apparatus performs channel encoding and quantization encoding on the channel information based on the bit overheads requirement of the second apparatus to obtain the CSI, maps the CSI to the time-frequency resource, and sends the CSI to the second apparatus.

Optionally, the first apparatus determines a first encoding model based on the first processing parameter. After inputting the channel information into the first encoding model, the first apparatus obtains the channel state information output by the first encoding model. The first apparatus sends the channel state information to the second apparatus.

Correspondingly, the second apparatus receives the channel state information from the first apparatus. The second apparatus determines a first decoding model based on the first processing parameter, and the second apparatus inputs the channel state information into the first decoding model, to obtain the channel information output by the first decoding model.

The first encoding model and the first decoding model are matching models. The first encoding model may be a compression encoding model, and correspondingly, the first decoding model is a decompression decoding model. Alternatively, the first encoding model may be a quantization encoding model, and correspondingly, the first decoding model is a dequantization decoding model. Alternatively, the first encoding model may be a compression and quantization encoding model, and correspondingly, the first decoding model is a decompression and dequantization decoding model. Alternatively, the first encoding model may be a channel encoding and quantization encoding model, and correspondingly, the first decoding model is a channel decoding and dequantization decoding model. This is not limited in this application, and a type of a model may be determined based on a corresponding function in specific implementation.

For example, the first encoding model is a compression and quantization encoding model, and the first apparatus determines, based on the first processing parameter from the second apparatus, to process the channel information by using a first compression and quantization encoding model corresponding to the first processing parameter. The first apparatus inputs the channel information with channel encoding into the first compression and quantization encoding model to obtain CSI output by the first compression and quantization encoding model. The CSI has been compressed and quantized by the first compression and quantization encoding model, and can meet the bit overheads requirement of the second apparatus. Correspondingly, the second apparatus determines, based on the first processing parameter, to use a first decompression and dequantization model corresponding to the first processing parameter. The second apparatus inputs the received CSI into the first decompression and dequantization decoding model, to obtain dequantized and decompressed CSI, and then performs channel decoding to obtain restored channel information.

For another example, the first encoding model is a channel encoding and quantization encoding model, and the first apparatus determines, based on the first processing parameter from the second apparatus, to process the channel information by using a first channel encoding and quantization encoding model corresponding to the first processing parameter. The first apparatus may input the channel information into the first channel encoding and quantization encoding model to obtain CSI output by the first apparatus. The CSI has been channel encoded and quantized by the first channel encoding and quantization encoding model, so that the bit overheads requirement of the second apparatus can be met. Correspondingly, the second apparatus determines, based on the first processing parameter, to use a first channel decoding and dequantization decoding model corresponding to the first processing parameter, and the second apparatus inputs the received CSI into the first channel decoding and dequantization decoding model, to obtain channel information restored through dequantization and channel decoding.

It should be noted that the first apparatus can obtain, based on the first encoding model determined based on the first processing parameter, the CSI that meets the bit overheads requirement of the second apparatus, and the second apparatus can perform decoding and restoring based on the corresponding first decoding model, to obtain the restored channel information. Specific processing functions that can be implemented by the first encoding model and the first decoding model are not limited in embodiments of this application.

The first apparatus stores a plurality of encoding models corresponding to a plurality of processing parameters, and the plurality of processing parameters include the first processing parameter. The first apparatus determines, from the plurality of encoding models based on the first processing parameter, the first encoding model corresponding to the first processing parameter.

In an implementation, the plurality of encoding models corresponding to the plurality of processing parameters are preconfigured in the first apparatus.

In another implementation, the first apparatus obtains, through training, the plurality of encoding models corresponding to the plurality of processing parameters, where the plurality of processing parameters include the first processing parameter.

The plurality of encoding models may be a plurality of models with a same model structure and different model parameters, and the plurality of processing parameters specifically correspond to different model parameters of the model structure. The first apparatus may determine, based on the first processing parameter, a model parameter corresponding to the first processing parameter, to obtain, based on the model parameter and the model structure, the first encoding model corresponding to the first processing parameter. However, this application is not limited thereto. The plurality of encoding models may also include encoding models with different model structures.

Correspondingly, the second apparatus stores a plurality of decoding models corresponding to the plurality of processing parameters, and the plurality of processing parameters include the first processing parameter. The second apparatus determines, from the plurality of encoding models based on the first processing parameter, the first decoding model corresponding to the first processing parameter.

In an implementation, the plurality of decoding models corresponding to the plurality of processing parameters are preconfigured in the second apparatus.

In another implementation, the second apparatus obtains, through training, the plurality of decoding models corresponding to the plurality of processing parameters, where the plurality of processing parameters include the first processing parameter.

For example, before transmitting the first information, the first apparatus and the second apparatus may perform joint model training. The first apparatus trains the encoding models, and the second apparatus trains the decoding models. After the first apparatus and the second apparatus perform joint training, the first apparatus obtains the plurality of encoding models corresponding to the plurality of processing parameters, and the second apparatus obtains the plurality of decoding models corresponding to the plurality of processing parameters.

The plurality of decoding models may be a plurality of models with a same model structure and different model parameters, and the plurality of processing parameters specifically correspond to different model parameters of the model structure. Alternatively, the plurality of decoding models may include decoding models with different model structures. This is not limited in this application.

According to the foregoing solution, the first apparatus provides the second apparatus with the sparsity characteristic of the channel between two apparatuses, so that the second apparatus may determine, based on the sparsity characteristic of the channel, the corresponding processing parameter for processing the channel information by the first apparatus and notify the first apparatus of the processing parameter, so that after processing the channel information based on the first processing parameter, the first apparatus can obtain the CSI bit overheads that match the sparsity characteristic of the channel, to improve feedback efficiency of the channel information. This implements proper allocation of a radio resource and improves resource utilization.

This application further provides a manner of representing the channel information. The channel information may be original channel data, or may be an eigenvector that is on each frequency domain unit and that is obtained by preprocessing the channel information.

For example, the channel information may be the original channel data. Dimensions of the channel information are related to a quantity $N_{tx}$ of transmit antennas, a quantity $N_{rx}$ of receive antennas, and a quantity $N_{sub}$ of frequency domain units. The channel information may be represented as a 3-dimensional matrix, and the 3 dimensions respectively correspond to $N_{tx}$, $N_{rx}$, and $N_{sub}$. In other words, different rows of the 3-dimensional matrix are channel information corresponding to different transmit antennas, different columns are channel information corresponding to different receive antennas, and different layers are channel information corresponding to different quantities of frequency domain units. In an example, in a processing process, the channel information may be represented as a 2-dimensional matrix, for example, represented as [Ntx, Nrx×Nsub], in other words, channel information corresponding to a receive antenna and channel information corresponding to a quantity of frequency domain units are combined, and an arrangement order is predefined. The first apparatus may perform SVD decomposition based on the 2-dimensional matrix, to obtain the sparsity characteristic of the channel, and notify the second apparatus via the first information.

In another example, when feeding back CSI channel sparsity, the first apparatus may obtain an eigenvector of each frequency domain unit through preprocessing, combine eigenvectors of all frequency domain units to obtain a 2-dimensional channel information matrix whose dimensions are [Ntx, Nsub], [Nsub, Ntx], or [Ntx×Nsub, 1], then obtain the sparsity characteristic of the channel based on the 2-dimensional channel information matrix, and notify the second apparatus of the sparsity characteristic of the channel via the first information.

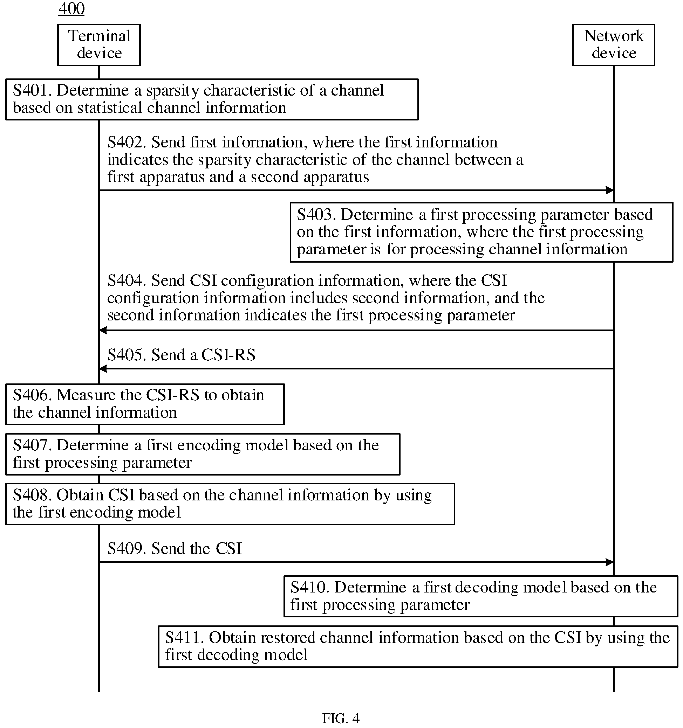

The communication method 300 shown in FIG. 3 may be applied to communication between a terminal device and a network device. In a communication method 400 shown in FIG. 4, a network device may obtain a sparsity characteristic of a channel from a terminal device, and notify the terminal device to process a processing parameter of channel information. It should be noted that for a same part in the communication method 400 and the communication method 300, refer to the foregoing descriptions. For brevity, details are not described herein again. The communication method 400 includes but is not limited to the following steps.

S401. A terminal device determines a sparsity characteristic of a channel based on statistical channel information.

The terminal device determines the sparsity characteristic of the channel based on the statistical channel information that is between the terminal device and a network device and that is obtained through statistics collection. The statistical channel information may be obtained by the terminal device based on a plurality of pieces of channel information by measuring a reference signal within a period of time.

S402. The terminal device sends first information to the network device, where the first information indicates the sparsity characteristic of the channel between a first apparatus and a second apparatus.

Correspondingly, the network device receives the first information from the terminal device, and determines the sparsity characteristic of the channel based on the first information. For example, the first information may include P energy proportions, and the P energy proportions are respective proportions of energy of P paths with strongest energy on the channel in total energy of the channel. Alternatively, the first information may include a quantity N of paths, where a proportion of a sum of energy of at least N paths with strongest energy on the channel in total energy of the channel is greater than or equal to a target energy proportion.

S403. The network device determines a first processing parameter based on the first information, where the first processing parameter is for processing channel information.

The network device determines, based on the sparsity characteristic of the channel between the network device and the terminal device, bit overheads of CSI fed back by the terminal device, to determine the first processing parameter for processing the channel information by the terminal device, so that the terminal device processes the channel information based on the first processing parameter to obtain the CSI of the bit overheads. This improves CSI feedback efficiency of the terminal device.

Optionally, the first processing parameter includes one or more of a quantization encoding parameter, an encoding/decoding parameter for compression, or a time-frequency resource parameter.

S404. The network device sends CSI configuration information to the terminal device, where the CSI configuration information includes second information, and the second information indicates the first processing parameter.

Correspondingly, the terminal device receives the CSI configuration information from the network device, and determines the first processing parameter based on the CSI configuration information. In this case, when the terminal device needs to feed back the CSI associated with the CSI configuration information, the terminal device processes the channel information by using the first processing parameter to obtain the CSI.

S405. The network device sends a CSI-RS to the terminal device.

Correspondingly, the terminal device receives the CSI-RS from the network device. The terminal device may receive, based on the CSI configuration information, the CSI-RS that is for measuring the channel information and that is indicated by the CSI configuration information.

S406. The terminal device measures the CSI-RS to obtain the channel information.

It should be understood that the channel information obtained by the terminal device through measurement based on the CSI-RS is real-time channel information, and the terminal device feeds back the channel information obtained through real-time measurement to the network device, so that the network device determines precoding of to-be-sent data based on the real-time channel information. This improves a capability of channel fading avoidance for sending data and improves communication quality. The statistical channel information used by the terminal device to determine the sparsity characteristic of the channel in S401 may be a statistical result of channel information obtained by measuring the CSI-RS for a plurality of times. This improves accuracy of the obtained sparsity characteristic of the channel. This reduces a case in which the sparsity characteristic that is of the channel and that is determined by the terminal device is inaccurate because the real-time channel information cannot fully reflect the sparsity characteristic of the channel. However, this application is not limited thereto. In specific implementation, the terminal device may also determine the sparsity characteristic of the channel based on the real-time channel information.

S407. The terminal device determines a first encoding model based on the first processing parameter.

The first encoding model may be obtained by the terminal device through training based on training data.

Optionally, the terminal device may train a plurality of encoding models corresponding to a plurality of first processing parameters, and determine the corresponding first encoding model based on the first processing parameter.

The terminal device and the network device may perform joint model training. The terminal device trains encoding models to obtain the encoding models corresponding to the plurality of processing parameters, and the network device trains decoding models to obtain a plurality of decoding models corresponding to the plurality of processing parameters. However, this application is not limited thereto. The plurality of encoding models and the plurality of decoding models may be separately preconfigured in the terminal device and the network device.

In S408, the terminal device obtains the CSI based on the channel information by using the first encoding model, and sends the CSI to the network device in S409. Correspondingly, the network device receives the CSI from the terminal device, and determines a first decoding model based on the first processing parameter in S410. In S411, the network device obtains restored channel information based on the CSI by using the first decoding model. The network device may determine, based on the channel information, precoding of downlink data to be sent to the terminal device, so that channel fading can be avoided for precoded downlink data, to improve data transmission reliability.

According to the foregoing solution, the terminal device provides the sparsity characteristic of the channel between two devices for the network device. The network device may determine, based on the sparsity characteristic of the channel, the processing parameter for processing channel information, to properly allocate a CSI resource (such as a channel encoding parameter, a quantization parameter, and a transmission resource). This improves channel information feedback efficiency. The network device can properly allocate a radio resource.

The foregoing describes the method provided in embodiments of this application with reference to the accompanying drawings. The following describes a communication apparatus and a communication device that are provided in embodiments of this application. To implement functions in the methods provided in the foregoing embodiments of this application, each network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

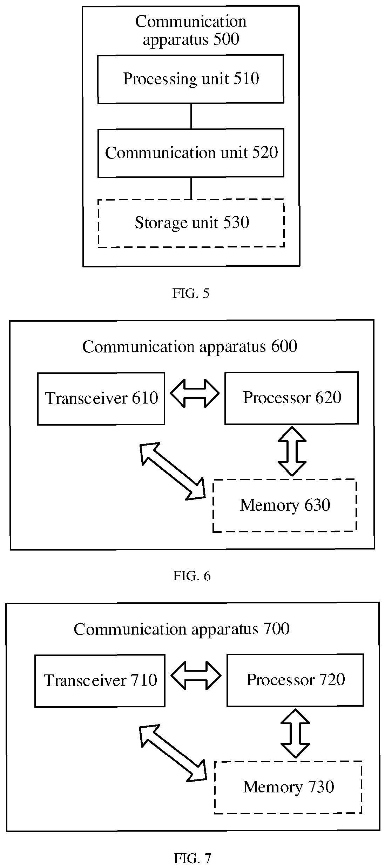

FIG. 5 is a schematic block diagram of a communication apparatus according to an embodiment of this application. As shown in FIG. 5, the communication apparatus 500 may include a transceiver unit 520.

In a possible design, the communication apparatus 500 may correspond to the first apparatus in the foregoing method embodiments. For example, the communication apparatus 500 may be a terminal device, or may be a chip configured in (or used in) the terminal device. The communication apparatus 500 may include a unit configured to perform the method performed by the first apparatus in the foregoing method embodiments. In addition, the units in the communication apparatus 500 and the foregoing other operations and/or functions are respectively for corresponding procedures in the foregoing method embodiments.

Optionally, the communication apparatus 500 may further include a processing unit 510. The processing unit 510 may be configured to process instructions or data, to implement a corresponding operation.

It should be further understood that when the communication apparatus 500 is a chip configured in (or used in) the terminal device, the transceiver unit 520 in the communication apparatus 500 may be an input/output interface or a circuit of the chip, and the processing unit 510 in the communication apparatus 500 may be a processor in the chip.

Optionally, the communication apparatus 500 may further include a storage unit 530. The storage unit 530 may be configured to store instructions or data. The processing unit 510 may execute the instructions or the data stored in the storage unit, so that the communication apparatus implements a corresponding operation.

It should be understood that the transceiver unit 520 in the communication apparatus 500 may be implemented through a communication interface (for example, a transceiver or an input/output interface), for example, may correspond to the transceiver 610 in the terminal device 600 shown in FIG. 6. The processing unit 510 in the communication apparatus 500 may be implemented by at least one processor, for example, may correspond to a processor 620 in the terminal device 600 shown in FIG. 6. The processing unit 510 in the communication apparatus 500 may be further implemented by at least one logic circuit. The storage unit 530 in the communication apparatus 500 may correspond to a memory in the terminal device 600 shown in FIG. 6.

It should be further understood that a specific process in which the units perform the foregoing corresponding steps is described in detail in the foregoing method embodiments. For brevity, details are not described herein again.

In another possible design, the communication apparatus 500 may correspond to the second apparatus in the foregoing method embodiments. For example, the communication apparatus 500 may be a network device, or a chip configured in (or used in) the network device. The communication apparatus 500 may include a unit configured to perform the method performed by the second apparatus in the foregoing method embodiments. In addition, the units in the communication apparatus 500 and the foregoing other operations and/or functions are respectively for corresponding procedures in the foregoing method embodiments.

Optionally, the communication apparatus 500 may further include a processing unit 510. The processing unit 510 may be configured to process instructions or data, to implement a corresponding operation.

It should be further understood that when the communication apparatus 500 is a chip configured in (or used in) the network device, the transceiver unit 520 in the communication apparatus 500 may be an input/output interface or a circuit of the chip, and the processing unit 510 in the communication apparatus 500 may be a processor in the chip.

Optionally, the communication apparatus 500 may further include a storage unit 530. The storage unit 530 may be configured to store instructions or data. The processing unit 510 may execute the instructions or the data stored in the storage unit, so that the communication apparatus implements a corresponding operation.

It should be understood that the communication apparatus 500 is configured in the network device, and the transceiver unit 520 in the communication apparatus 500 may be implemented through a communication interface (for example, a transceiver or an input/output interface), for example, may correspond to a transceiver 710 in a network device 700 shown in FIG. 7. The processing unit 510 in the communication apparatus 500 may be implemented by at least one processor, for example, may correspond to a processor 720 in the network device 700 shown in FIG. 7. The processing unit 510 in the communication apparatus 500 may be implemented by at least one logic circuit.

It should be further understood that a specific process in which the units perform the foregoing corresponding steps is described in detail in the foregoing method embodiments. For brevity, details are not described herein again.

FIG. 6 is a diagram of a structure of a terminal device 600 according to an embodiment of this application. The terminal device 600 may be used in the system shown in FIG. 1, to implement a function of the first apparatus in the foregoing method embodiments. As shown in FIG. 6, the terminal device 600 includes a processor 620 and a transceiver 610. Optionally, the terminal device 600 further includes a memory 630. The processor 620, the transceiver 610, and the memory 630 may communicate with each other via an internal connection path, to transfer a control signal and/or a data signal. The memory 630 is configured to store a computer program, and the processor 620 is configured to execute the computer program in the memory 630, to control the transceiver 610 to receive and send the signal.

It should be understood that the terminal device 600 shown in FIG. 6 can implement a process related to the first apparatus in the foregoing method embodiments. Operations and/or functions of the modules in the terminal device 600 are respectively for implementing corresponding procedures in the foregoing method embodiments. For details, refer to the descriptions in the foregoing method embodiments. To avoid repetition, detailed descriptions are properly omitted herein.

Optionally, the terminal device 600 may further include a power supply, configured to supply power to various components or circuits in the terminal device.

In addition, to improve functions of the terminal device, the terminal device 600 may further include an input/output apparatus, for example, include one or more of an input unit, a display unit, an audio circuit, a camera, a sensor, and the like, and the audio circuit may further include a speaker, a microphone, and the like.

FIG. 7 is a diagram of a structure of a network device according to an embodiment of this application. The network device 700 may be used in the system shown in FIG. 1, to implement a function of the second apparatus in the foregoing method embodiments. As shown in FIG. 7, the network device 700 includes a processor 720 and a transceiver 710. Optionally, the network device 700 further includes a memory 730. The processor 720, the transceiver 710, and the memory 730 may communicate with each other via an internal connection path, to transfer a control signal and/or a data signal. The memory 730 is configured to store a computer program, and the processor 720 is configured to execute the computer program in the memory 730, to control the transceiver 710 to receive and send the signal.

It should be understood that the network device 700 shown in FIG. 7 can implement the process related to the second apparatus in the foregoing method embodiments. Operations and/or functions of modules in the network device 700 are respectively for implementing corresponding procedures in the foregoing method embodiments. For details, refer to the descriptions in the foregoing method embodiments. To avoid repetition, detailed descriptions are properly omitted herein.

It should be understood that the network device 700 shown in FIG. 7 may be an eNB or a gNB. Optionally, the network device includes a network device of a central unit (central unit, CU), a distributed unit (distributed unit, DU), an active antenna unit (active antenna unit, AAU), and the like. A specific architecture of the network device is not limited in this application.

A processor and a memory in each of the terminal device 600 and the network device 700 may be combined into one processing apparatus. The processor is configured to execute program code stored in the memory to implement the foregoing functions. During specific implementation, the memory may alternatively be integrated into the processor, or may be independent of the processor. The processor may correspond to the processing unit in FIG. 5. The transceiver may correspond to the transceiver unit in FIG. 5. The transceiver may include a receiver (or referred to as a receiver machine or a receiver circuit) and a transmitter (or referred to as a transmitter machine or a transmitter circuit). The receiver is configured to receive a signal, and the transmitter is configured to transmit a signal.

An embodiment of this application further provides a processing apparatus, including a processor and a (communication) interface. The processor is configured to perform the method according to any one of the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system-on-a-chip (system-on-a-chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

According to the methods provided in embodiments of this application, this application further provides a computer program product. The computer program product includes computer program code. When the computer program code is executed by one or more processors, an apparatus including the processor is enabled to perform the method in any one of the foregoing method embodiments.

The technical solutions provided in embodiments of this application may be fully or partially implemented through software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, a network device, a terminal device, a core network device, a machine learning device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

According to the methods provided in embodiments of this application, this application further provides a computer-readable storage medium. The computer-readable storage medium stores program code. When the program code is run by one or more processors, an apparatus including the processor is enabled to perform the method in any one of the foregoing method embodiments.

According to the method provided in embodiments of this application, this application further provides a system, including at least one first apparatus and at least one second apparatus.

In the several embodiments provided in this application, it should be understood that the disclosed system, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, displayed or discussed mutual couplings or direct couplings or communication connections may be implemented by using some interfaces. Indirect couplings or communication connections between apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A channel information transmission method, comprising:

sending, by a first apparatus, first information to a second apparatus, wherein the first information indicates a sparsity characteristic of a channel between the first apparatus and the second apparatus; and
receiving, by the first apparatus, second information from the second apparatus, wherein the second information indicates a first processing parameter, and the first processing parameter is for processing channel information.

2. The method according to claim 1, wherein the first processing parameter comprises one or more of the following: a quantization parameter, an encoding/decoding parameter for compression, or a time-frequency resource parameter.

3. The method according to claim 1 or 2, wherein the first information comprises P energy proportions, and the P energy proportions are respective proportions of energy of P paths with strongest energy on the channel in total energy of the channel.

4. The method according to claim 1 or 2, wherein the first information comprises a quantity N of paths, N is a positive integer, and a proportion of a sum of energy of at least N paths with strongest energy on the channel in total energy of the channel is greater than or equal to a target energy proportion.

5. The method according to any one of claims 1 to 4, wherein the method further comprises:
periodically sending, by the first apparatus to the second apparatus, information that indicates the sparsity characteristic of the channel.

6. The method according to any one of claims 1 to 4, wherein the sending, by a first apparatus, first information to a second apparatus comprises:

receiving, by the first apparatus, third information from the second apparatus, wherein the third information indicates the first apparatus to feed back the sparsity characteristic of the channel; and
sending, by the first apparatus, the first information to the second apparatus.

7. The method according to any one of claims 1 to 6, wherein the method further comprises:

processing, by the first apparatus, the channel information based on the first processing parameter to obtain channel state information; and
sending, by the first apparatus, the channel state information to the second apparatus.

8. The method according to claim 7, wherein the processing the channel information based on the first processing parameter to obtain channel state information comprises:

determining a first encoding model based on the first processing parameter;
inputting the channel information into the first encoding model, to obtain the channel state information output by the first encoding model; and
sending the channel state information to the second apparatus.

9. The method according to claim 7, wherein the method further comprises:

obtaining, by the first apparatus through training, a plurality of encoding models corresponding to a plurality of processing parameters, wherein the plurality of processing parameters comprise the first processing parameter; and
determining a first encoding model based on the first processing parameter comprises:
determining, based on the first processing parameter, the first encoding model corresponding to the first processing parameter from the plurality of encoding models.

10. A channel information transmission method, comprising:

receiving, by a second apparatus, first information from a first apparatus, wherein the first information indicates a sparsity characteristic of a channel between the first apparatus and the second apparatus;
determining, by the second apparatus, a first processing parameter of channel information based on the first information; and
sending, by the second apparatus, second information to the first apparatus, wherein the second information indicates the first processing parameter.

11. The method according to claim 10, wherein the processing parameter comprises one or more of the following:

a quantization parameter, a compression encoding parameter, or a time-frequency resource parameter.

12. The method according to claim 10 or 11, wherein the first information comprises P energy proportions, and the P energy proportions are respective proportions of energy of P paths with strongest energy on the channel in total energy of the channel.

13. The method according to claim 10 or 11, wherein the first information comprises a quantity N of paths, N is a positive integer, and a proportion of a sum of energy of at least N paths with strongest energy on the channel in total energy of the channel is greater than or equal to a target energy proportion.

14. The method according to any one of claims 10 to 13, wherein the receiving, by a second apparatus, first information from a first apparatus comprises:
periodically receiving, by the second apparatus, information that is from the first apparatus and that indicates the sparsity characteristic of the channel, wherein the first information is information received by the second apparatus in one period.

15. The method according to any one of claims 10 to 13, wherein the receiving, by a second apparatus, first information from a first apparatus comprises:

sending, by the second apparatus, third information to the first apparatus, wherein the third information indicates the first apparatus to feed back the sparsity characteristic of the channel; and
receiving, by the second apparatus, the first information from the first apparatus.

16. The method according to any one of claims 10 to 15, wherein the method further comprises:

receiving, by the second apparatus, channel state information from the first apparatus; and
processing, by the second apparatus, the channel state information based on the first processing parameter to obtain the channel information.

17. The method according to claim 16, wherein the processing the channel state information based on the first processing parameter to obtain the channel information comprises:

determining a first decoding model based on the first processing parameter; and
inputting the channel state information into the first decoding model, to obtain the channel information output by the first decoding model.

18. The method according to claim 17, wherein the method further comprises:

obtaining, by the second apparatus through training, a plurality of decoding models corresponding to a plurality of processing parameters, wherein the plurality of processing parameters comprise the first processing parameter; and
the determining a first decoding model based on the first processing parameter comprises:
determining, based on the first processing parameter, the first decoding model corresponding to the first processing parameter from the plurality of decoding models.

19. A communication apparatus, comprising a processing unit and a transceiver unit, wherein

the processing unit is configured to determine first information, wherein the first information indicates a sparsity characteristic of a channel between a first apparatus and a second apparatus;
the transceiver unit is configured to send the first information to the second apparatus; and
the transceiver unit is further configured to receive second information from the second apparatus, wherein the second information indicates a first processing parameter, and the first processing parameter is for processing channel information.

20. The apparatus according to claim 19, wherein the first processing parameter comprises one or more of the following:
a quantization parameter, an encoding/decoding parameter for compression, or a time-frequency resource parameter.

21. The apparatus according to claim 19 or 20, wherein the first information comprises P energy proportions, and the P energy proportions are respective proportions of energy of P paths with strongest energy on the channel in total energy of the channel.

22. The apparatus according to claim 19 or 20, wherein the first information comprises a quantity N of paths, N is a positive integer, and a proportion of a sum of energy of at least N paths with strongest energy on the channel in total energy of the channel is greater than or equal to a target energy proportion.

23. The apparatus according to any one of claims 19 to 22, wherein the processing unit is further configured to periodically send, to the second apparatus, information that indicates the sparsity characteristic of the channel.

24. The apparatus according to any one of claims 19 to 22, wherein the transceiver unit is specifically configured to:

   receive third information from the second apparatus, wherein the third information indicates the first apparatus to feed back the sparsity characteristic of the channel; and
   send the first information to the second apparatus.

25. The apparatus according to any one of claims 19 to 24, wherein

   the processing unit is further configured to process the channel information based on the first processing parameter, to obtain channel state information; and
   the transceiver unit is further configured to send the channel state information to the second apparatus.

26. The apparatus according to claim 25, wherein

   the processing unit is specifically configured to determine a first encoding model based on the first processing parameter; and
   the processing unit is specifically configured to input the channel information into the first encoding model, to obtain the channel state information output by the first encoding model.

27. The apparatus according to claim 26, wherein

   the processing unit is further configured to obtain, through training, a plurality of encoding models corresponding to a plurality of processing parameters, wherein the plurality of processing parameters comprise the first processing parameter; and
   the processing unit is specifically configured to determine, based on the first processing parameter, the first encoding model corresponding to the first processing parameter from the plurality of encoding models.

28. A communication apparatus, comprising a transceiver unit and a processing unit, wherein

   the transceiver unit is configured to receive first information from a first apparatus, wherein the first information indicates a sparsity characteristic of a channel between the first apparatus and a second apparatus;
   the processing unit is configured to determine a first processing parameter of channel information based on the first information; and
   the transceiver unit is further configured to send second information to the first apparatus, wherein the second information indicates the first processing parameter.

29. The apparatus according to claim 28, wherein the processing parameter comprises one or more of the following: a quantization parameter, a compression encoding parameter, or a time-frequency resource parameter.

30. The apparatus according to claim 28 or 29, wherein the first information comprises P energy proportions, and the P energy proportions are respective proportions of energy of P paths with strongest energy on the channel in total energy of the channel.

31. The apparatus according to claim 28 or 29, wherein the first information comprises a quantity N of paths, N is a positive integer, and a proportion of a sum of energy of at least N paths with strongest energy on the channel in total energy of the channel is greater than or equal to a target energy proportion.

32. The apparatus according to any one of claims 28 to 31, wherein the transceiver unit is specifically configured to periodically receive information that is from the first apparatus and that indicates the sparsity characteristic of the channel, wherein the first information is information received by the second apparatus in one period.

33. The apparatus according to any one of claims 28 to 31, wherein the transceiver unit is specifically configured to send third information to the first apparatus, wherein the third information indicates the first apparatus to feed back the sparsity characteristic of the channel; and
the transceiver unit is further configured to receive the first information from the first apparatus.

34. The apparatus according to any one of claims 28 to 33, wherein the transceiver unit is further configured to receive channel state information from the first apparatus; and
the processing unit is further configured to process the channel state information based on the first processing parameter, to obtain the channel information.

35. The apparatus according to claim 34, wherein the processing unit is specifically configured to:

     determine a first decoding model based on the first processing parameter; and
     input the channel state information into the first decoding model, to obtain the channel information output by the first decoding model.

36. The apparatus according to claim 35, wherein

     the processing unit is further configured to obtain, through training, a plurality of decoding models corresponding to a plurality of processing parameters, wherein the plurality of processing parameters comprise the first processing parameter; and
     the processing unit is specifically configured to determine, based on the first processing parameter, the first decoding model corresponding to the first processing parameter from the plurality of decoding models.

37. A communication apparatus, comprising at least one processor coupled to a memory, wherein
the memory is configured to store a program or instructions, and the at least one processor is configured to execute the program or the instructions, to cause the apparatus to implement the method according to any one of claims 1 to 9, or implement the method according to any one of claims 10 to 18.

38. A chip, comprising at least one processor and a communication interface, wherein
the communication interface is configured to receive a signal input to the chip or a signal output from the chip, and the processor communicates with the communication interface, and implements the method according to any one of claims 1 to 9 or implements the method according to any one of claims 10 to 18 by using a logic circuit or executing code instructions.

39. A computer-readable storage medium, storing instructions, wherein when the instructions are run on a computer, the computer is caused to perform the method according to any one of claims 1 to 9, or perform the method according to any one of claims 10 to 18.

40. A communication apparatus, comprising at least one processor and a communication circuit, wherein the at least one processor is configured to execute instructions, to cause the communication apparatus to perform the method according to any one of claims 1 to 9, or perform the method according to any one of claims 10 to 18.

FIG. 1

FIG. 2

300

First apparatus

Second apparatus

S301. Send first information, where the first information indicates a sparsity characteristic of a channel between the first apparatus and the second apparatus

S302. Determine a first processing parameter based on the first information, where the first processing parameter is for processing channel information

S303. Send second information, where the second information indicates the first processing parameter

FIG. 3

400

```
┌──────────┐                                                      ┌──────────┐
│ Terminal │                                                      │ Network  │
│  device  │                                                      │  device  │
└──────────┘                                                      └──────────┘
```

S401. Determine a sparsity characteristic of a channel based on statistical channel information

S402. Send first information, where the first information indicates the sparsity characteristic of the channel between a first apparatus and a second apparatus

S403. Determine a first processing parameter based on the first information, where the first processing parameter is for processing channel information

S404. Send CSI configuration information, where the CSI configuration information includes second information, and the second information indicates the first processing parameter

S405. Send a CSI-RS

S406. Measure the CSI-RS to obtain the channel information

S407. Determine a first encoding model based on the first processing parameter

S408. Obtain CSI based on the channel information by using the first encoding model

S409. Send the CSI

S410. Determine a first decoding model based on the first processing parameter

S411. Obtain restored channel information based on the CSI by using the first decoding model

FIG. 4

Communication
apparatus 500

Processing unit 510

Communication unit 520

Storage unit 530

FIG. 5

Communication apparatus 600

Transceiver 610 ⟺ Processor 620

Memory 630

FIG. 6

Communication apparatus 700

Transceiver 710 ⟺ Processor 720

Memory 730

FIG. 7

## INTERNATIONAL SEARCH REPORT

| International application No. |
|---|
| **PCT/CN2023/096920** |

| A. | CLASSIFICATION OF SUBJECT MATTER |
|---|---|

H04B7/0413(2017.01)i

According to International Patent Classification (IPC) or to both national classification and IPC

| B. | FIELDS SEARCHED |
|---|---|

Minimum documentation searched (classification system followed by classification symbols)

IPC: H04B H04L H04W

Documentation searched other than minimum documentation to the extent that such documents are included in the fields searched

Electronic data base consulted during the international search (name of data base and, where practicable, search terms used)

CNTXT, ENTXTC, CNKI, VEN, 3GPP: 反馈, 稀疏, 信道状态, feedback, sparsity, CSI

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114287153 A (HUAWEI TECHNOLOGIES CO., LTD.) 05 April 2022 (2022-04-05) description, paragraphs [0034]-[0057] and figure 2 | 1-2, 5-7, 10-11, 14-16, 19-20, 23-25, 28-29, 32-34, 37-40 |
| A | CN 103997397 A (BEIJING UNIVERSITY OF POSTS AND TELECOMMUNICATIONS) 20 August 2014 (2014-08-20) entire document | 1-40 |
| A | CN 105763234 A (SOUTHEAST UNIVERSITY) 13 July 2016 (2016-07-13) entire document | 1-40 |
| A | WO 2020047774 A1 (HUAWEI TECHNOLOGIES CO., LTD.) 12 March 2020 (2020-03-12) entire document | 1-40 |
| A | WO 2021046783 A1 (NOKIA SHANGHAI BELL CO., LTD. et al.) 18 March 2021 (2021-03-18) entire document | 1-40 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 September 2023** | **05 September 2023** |

| Name and mailing address of the ISA/CN | Authorized officer |
|---|---|
| China National Intellectual Property Administration (ISA/CN) China No. 6, Xitucheng Road, Jimenqiao, Haidian District, Beijing 100088 | |
| | Telephone No. |

Form PCT/ISA/210 (second sheet) (July 2022)

**INTERNATIONAL SEARCH REPORT**
Information on patent family members

International application No.

**PCT/CN2023/096920**

| Patent document cited in search report | | | Publication date (day/month/year) | Patent family member(s) | | | Publication date (day/month/year) |
|---|---|---|---|---|---|---|---|
| CN | 114287153 | A | 05 April 2022 | US | 2021067297 | A1 | 04 March 2021 |
| | | | | US | 11569961 | B2 | 31 January 2023 |
| | | | | WO | 2021037131 | A1 | 04 March 2021 |
| | | | | EP | 4018740 | A1 | 29 June 2022 |
| | | | | EP | 4018740 | A4 | 12 October 2022 |
| CN | 103997397 | A | 20 August 2014 | CN | 103997397 | B | 01 October 2019 |
| CN | 105763234 | A | 13 July 2016 | CN | 105763234 | B | 21 August 2018 |
| WO | 2020047774 | A1 | 12 March 2020 | | None | | |
| WO | 2021046783 | A1 | 18 March 2021 | CN | 114342281 | A | 12 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210655463